# EUROPÄISCHE PATENTSCHRIFT

(11) **EP 3 898 340 B1**
(45) Veröffentlichungstag und Bekanntmachung des Hinweises auf die Patenterteilung: **15.01.2025**
(21) Anmeldenummer: 19832848.6
(22) Anmeldetag: 10.12.2019
(51) Int. Cl.: B60R 13/08

(54) **SCHALLISOLATIONSELEMENT FÜR DIE STIRNWAND EINER FAHRZEUGKAROSSERIE UND TRÄGERELEMENT FÜR EIN DERARTIGES SCHALLISOLATIONSELEMENT**
SOUND INSULATION ELEMENT FOR THE FIREWALL OF A VEHICLE BODY AND SUPPORT ELEMENT FOR A SOUND INSULATION ELEMENT OF THIS TYPE
ÉLÉMENT D'ISOLATION CONTRE LE BRUIT POUR LA PAROI FRONTALE D'UNE CARROSSERIE DE VÉHICULE ET ÉLÉMENT SUPPORT POUR UN TEL ÉLÉMENT D'ISOLATION CONTRE LE BRUIT

(30) Priorität: 18.12.2018 DE 102018132726
(43) Veröffentlichungstag der Anmeldung: 27.10.2021
(73) Patentinhaber: Adler Pelzer Holding GmbH, 58099 Hagen (DE)
(72) Erfinder: SCHULZE, Volkmar, 84069 Schierling (DE); RIEDERER, Frank, 58455 Witten (DE); KARCZ, Thomas, 44369 Dortmund (DE)
(74) Vertreter: Hannke Bittner & Partner mbB Regensburg
(86) Internationale Anmeldenummer: PCT/EP2019/084363
(87) Internationale Veröffentlichungsnummer: WO 2020/126651

(56) Entgegenhaltungen:
- DE-U1- 202004 008 165
- US-A1- 2007 218 790

## Beschreibung

Die Erfindung betrifft ein Schallisolationselement für die den Fahrgastraum vom Motorraum trennende Stirnwand einer Fahrzeugkarosserie. Ferner betrifft die Erfindung ein Trägerelement für ein Schallisolationselement zur Anordnung an der Stirnwand einer Fahrzeugkarosserie.

Es ist grundsätzlich bekannt, an der Innenseite der Stirnwand einer Fahrzeugkarosserie, also an der Innenseite der Wand zwischen Fahrgastzelle und Motorraum einer Fahrzeugkarosserie ein Schallisolationselement anzuordnen. Als ein Beispiel einer derartigen Stirnwandisolation sei auf WO-A-2018/192858, US-A-2006/0091699 oder DE-A-37 33 284 verwiesen.

Die US 2007/218790 offenbart ein Schallisolationselement für die zwischen Fahrgastraum und Motorraum angeordnete Stirnwand einer Fahrzeugkarosserie, mit einem Verbundbauteil, das eine Kunststoff-Trägerschicht und eine mit dieser verbundene Schalldämpfungsschicht aufweist, wobei das Verbundbauteil eine in dessen Einbauzustand betrachtet dem Fahrgastraum zugewandte, von der Außenfläche der Kunststoff-Trägerschicht gebildete Vorderseite und mindestens einer ersten Durchgangsöffnung in dem Verbundbauteil, wobei die erste Durchgangsöffnung ein in der Kunststoff-Trägerschicht ausgebildetes Trägerschichtloch mit einem Lochrand aufweist.

Derartige Schallisolationselemente weisen einen Sandwich-Aufbau auf, der eine auch als Schwerschicht bezeichnete Kunststoff-Trägerschicht und eine an die Kunststoff-Trägerschicht angeformte Schalldämpfungsschicht aus Schalldämpfungsmaterial, insbesondere aus einem PUR-Schaummaterial aufweist. Die Stirnwand der Fahrzeugkarosserie weist mehrere Durchführungen für Leitungen, Rohre oder Bauteile auf. Dementsprechend ist auch das Schallisolationselement mit Durchgangsöffnungen versehen, die typischerweise mit den Durchführungen in der Stirnwand fluchten. Je nach Art des durch das Schallisolationselement und durch die Stirnwand durchgeführten Elements ist es erforderlich, dieses vor einer mechanischen Beschädigung zu schützen (Scheuerschutz). Eine mögliche Maßnahme der Realisierung eines derartigen Schutzes besteht darin, den Lochrand einer Durchgangsöffnung des Schallisolationselements zu umschäumen bzw. mit dem Schalldämpfungsmaterial zu umgeben.

Das Anformen des Schalldämpfungsmaterials an die Kunststoff-Trägerschicht erfolgt typischerweise in einem speziell dafür vorgesehenen Formwerkzeug (im Regelfall handelt es sich hier um ein Schäumungswerkzeug), in das die Kunststoff-Trägerschicht eingelegt wird. Die Kunststoff-Trägerschicht ist zuvor in einem dafür vorgesehenen anderen Formwerkzeug hergestellt worden. Im Bereich von zumindest teilweise von Schalldämpfungsmaterial eingebetteten Lochrändern der Kunststoff-Trägerschicht muss das Schalldämpfungsmaterial zumindest teilweise bis in das Trägerschichtloch hineingelangen können. Zum Teil sollte das Schalldämpfungsmaterial den Lochrand beidseitig der Kunststoff-Trägerschicht umschließen. In beiden Fällen kann dies beim Herstellungsprozess dazu führen, dass die Kunststoff-Trägerschicht innerhalb der Werkzeugform, in die sie eingelegt ist, "aufschwimmt", was zu nicht zufriedenstellenden Herstellungsergebnissen führen kann. Um dies zu vermeiden, weisen die entsprechenden Formwerkzeuge zum Anformen des Schalldämpfungsmaterials an die Kunststoff-Trägerschicht Niederhaltestifte auf, die die Kunststoff-Trägerschicht längs eines Lochrands, der von Schalldämpfungsmaterial zumindest teilweise umschlossen werden soll, niederhalten. Derartige Formwerkzeug-Niederhaltestifte erhöhen die Herstellungskosten des Formwerkzeugs und erschweren den grundsätzlich bei derartigen Formwerkzeugen von Zeit zu Zeit zu erfolgenden Reinigungsprozess. Außerdem weist die mit einem solchen Formwerkzeug angeformte Schalldämpfungsschicht durch die Niederhaltevorsprünge bedingte Hohlräume auf, was akustisch von Nachteil ist.

Aus DE-A-10 2013 006 300 ist es bekannt, einen von Kunststoff zu umgebenden Kern eines Gerätegriffs durch allseitig vom Kern abstehende Abstandsstifte zentrisch in einer Form zu positionieren. Diese Vorgehensweise eignet sich nicht für solche 2K-Bauteile, deren eine Kunststoffkomponente nur einseitig mit der zweiten Kunststoffkomponente versehen werden soll.

Aus DE-C-198 33 098 ist ein Verfahren zur Herstellung eines gepolsterten Gegenstandes mit einem Kern und einer diesen allseitig umgebenden Polsterhülle bekannt.

Aufgabe der Erfindung ist es, ein Schallisolationselement für die zwischen Fahrgastraum und Motorraum angeordnete Stirnwand einer Fahrzeugkarosserie sowie ein Trägerelement für ein derartiges Schallisolationselement zu schaffen, mit deren Hilfe sich der werkzeugseitig zu betreibende Aufwand zur Positionsbeibehaltung des Trägerelements in dem Formwerkzeug zur Anformung von Schalldämpfungsmaterial an das Trägerelement reduzieren lässt.

Zur Lösung dieser Aufgabe wird mit der Erfindung ein Schallisolationselement für die zwischen Fahrgastraum und Motorraum angeordnete Stirnwand einer Fahrzeugkarosserie vorgeschlagen, wobei das Schallisolationselement versehen ist mit
- einem Verbundbauteil, das eine Kunststoff-Trägerschicht und eine mit dieser verbundene Schalldämpfungsschicht aufweist,
- wobei das Verbundbauteil eine in dessen Einbauzustand betrachtet dem Fahrgastraum zugewandte, von der Außenseite der Kunststoff-Trägerschicht gebildete Vorderseite und eine an der Stirnwand anliegende Rückseite aufweist, die von der der Kunststoff-Trägerschicht abgewandten Außenseite der Schalldämpfungsschicht gebildet ist, und
- mindestens einer ersten Durchgangsöffnung in dem Verbundbauteil,
- wobei die erste Durchgangsöffnung ein in der Kunststoff-Trägerschicht ausgebildetes Trägerschichtloch mit einem Lochrand und ein in der Schalldämpfungsschicht ausgebildetes Schalldämpfungsschichtloch mit einem Lochrand aufweist und
- wobei an dem und/oder versetzt zu dem Lochrand des Trägerschichtlochs auf der der Außenseite der Kunststoff-Trägerschicht abgewandten und damit der Schalldämpfungsschicht zugewandten Innenseite der Kunststoff-Trägerschicht von dieser mindestens ein Niederhaltevorsprung aufragt, der in dem Schalldämpfungsmaterial der Schalldämpfungsschicht eingebettet ist und dessen der Kunststoff-Trägerschicht abgewandten freien Enden mit der der Kunststoff-Trägerschicht abgewandten Außenseite der Schalldämpfungsschicht im Wesentlichen fluchten.

Die Erfindung sieht sinngemäß vor, anstelle eines Niederhaltevorsprungs, der am Formwerkzeug angeordnet ist, einen Niederhaltevorsprung vorzusehen, der Teil der Kunststoff-Trägerschicht, also Teil des Trägerelements des Schallisolationselements ist, an das das Schalldämpfungsmaterial angeformt wird. Ein derartiger Niederhaltevorsprung befindet sich am Lochrand oder nach außen versetzt zum Lochrand einer Durchbrechung, d.h. eines Lochs in der Kunststoff-Trägerschicht, die zusammen mit einem damit fluchtenden Loch in der Schalldämpfungsschicht eine Durchführung des Schallisolationselements bildet.

Bei dem erfindungsgemäßen Schallisolationselement ist also der mindestens eine Niederhaltevorsprung, der beispielsweise stiftförmig oder als Dom ausgebildet sein kann, in dem Schalldämpfungsmaterial der Schalldämpfungsschicht eingebettet. Zweckmäßigerweise existieren umlaufend um einen Lochrand eines Trägerschichtlochs mehrere derartige Niederhaltevorsprünge. Anders als beim Stand der Technik, bei dem die Niederhaltevorsprünge (Niederhaltestifte) Bestandteil eines der Formwerkzeugteile für die Anformung des Schalldämpfungsmaterial an die Kunststoff-Trägerschicht sind, existieren also beim erfindungsgemäßen Schallisolationselement nach der Entformung aus dem Formwerkzeug keine Hohlräume in der Schalldämpfungsschicht; vielmehr erstrecken sich die Niederhaltevorsprünge der Kunststoff-Trägerschicht in die Schalldämpfungsschicht hinein und gegebenenfalls durch diese hindurch.

Das erfindungsgemäße Schallisolationselement ist, wie bereits oben beschrieben, als Verbundbauteil ausgebildet und weist eine Kunststoff-Trägerschicht (sogenannte Schwerschicht) und eine Schalldämpfungsschicht aus Schalldämpfungsmaterial (z.B. PU-Schaum) auf. Das derart zweischichtig aufgebaute Verbundbauteil weist zwei Außenseiten auf, von denen die eine von der Kunststoff-Trägerschicht und die andere von der Schalldämpfungsschicht gebildet ist. Die Innenseiten beider Schichten liegen aneinander an; an den Innenseiten sind die beiden Schichten miteinander verbunden. Im Einbauzustand weist die Außenseite der Kunststoff-Trägerschicht zum Fahrgastraum; diese Seite des Verbundbauteils bildet die Vorderseite, während die Rückseite des Verbundbauteils von der an der Stirnwand anliegenden Außenseite der Schalldämpfungsschicht gebildet wird.

Von der Innenseite der Kunststoff-Trägerschicht steht nun im Bereich eines Lochs der Trägerschicht der mindestens eine Niederhaltevorsprung ab, dessen der Rückseite der Kunststoff-Trägerschicht abgewandtes freies Ende mit der Außenseite der Schalldämpfungsschicht im Wesentlichen fluchtet, indem das freie Ende nicht über die Außenseite der Schalldämpfungsschicht übersteht sondern vielmehr vorzugsweise vergleichsweise dünn (z.B. mindestens 1 mm und maximal 5 mm) von Schalldämpfungsmaterial überdeckt ist.

Wie bereits zuvor erwähnt, ist es zweckmäßig, umlaufend um einen Lochrand mehrere Niederhaltevorsprünge vorzusehen, die dann zweckmäßigerweise in Form von Stiften oder Domen ausgebildet sind. Die Ausgestaltung der Niederhaltevorsprünge bzw. des mindestens einen Niederhaltevorsprungs sollte so gewählt sein, dass in der Werkzeugform, mittels derer das Schalldämpfungsmaterial an die Kunststoff-Trägerschicht angeformt wird, dieses Schalldämpfungsmaterial den mindestens einen Niederhaltevorsprung umfließen und überströmen kann. Sofern in einer zweckmäßigen Ausgestaltung der Erfindung als Niederhaltevorsprung ein zumindest teilweise das Trägerschichtloch umgebender Kragen eingesetzt wird, sollte dieser in seiner Umfangswand Aussparungen oder zum oberen Rand hin offene Randaussparungen aufweisen. Bei einer derartigen Ausgestaltung des Kragens kann dieser wiederum von dem in die Werkzeugform eingebrachten Schalldämpfungsmaterial durchströmt werden.

Die zuvor beschriebene erfindungsgemäße Konstruktion des Schallisolationselements dient insbesondere der Ausbildung von mit Schalldämpfungsmaterial versehenen Lochrändern der Kunststoff-Trägerschicht. Das Schalldämpfungsmaterial weist dabei einen in das Trägerschichtloch hineinragenden Überstandsbereich auf, der an der Außenseite der Kunststoff-Trägerschicht mit dieser fluchtet oder aber auch nach vorne übersteht und damit den Lochrand beidseitig umgreift. Zur Verhinderung eines ungewollten Abscherens des Schalldämpfungsmaterials im Lochrandbereich können durch vom Schalldämpfungsmaterial umformte Verankerungsvorsprünge, Durchbrechungen o.dgl. Verhakungsstrukturen zwischen der Kunststoff-Trägerschicht und der Schalldämpfungsschicht vorgesehen sein. Beispiele für von Schalldämpfungsmaterial ausgefüllten Durchbrechungen in der Kunststoff-Trägerschicht im Bereich von Durchführungen des Schallisolationselements finden sich in DE-A-41 32 571, EP-A-2 786 851 und JP H07-285 138 A.

Einzelne Ausgestaltungen der Erfindung sind Gegenstand der Unteransprüche.

Bei einer vorteilhaften Weiterbildung der Erfindung ist vorgesehen, dass über den Lochrand des Trägerschichtlochs nach innen in das erste Loch Schalldämpfungsmaterial der Schalldämpfungsschicht übersteht und einen ringförmigen Überstandsrand bildet.

Bei dieser Ausgestaltung kann ferner mit Vorteil vorgesehen sein, dass der Überstandsrand mit der die Außenseite der Kunststoff-Trägerschicht fluchtet oder sich entlang zumindest eines Teilbereichs des Lochrands des Trägerschichtlochs auf der Außenseite der Kunststoff-Trägerschicht erstreckt. Das erfindungsgemäße Schallisolationselement kann vorteilhafterweise ferner versehen sein mit mindestens einer zweiten Durchgangsöffnung in dem Verbundbauteil, die ein in der Kunststoff-Trägerschicht ausgebildetes Trägerschichtloch und ein in der Schalldämpfungsschicht ausgebildetes Schalldämpfungsschichtloch umfasst, wobei beide Löcher miteinander fluchtende Lochränder aufweisen.

Neben dem zuvor beschriebenen erfindungsgemäßen Schallisolationselement lässt sich die oben angegebene Aufgabe erfindungsgemäß auch lösen durch ein Trägerelement für ein Schallisolationsverbundbauteil zur Anordnung an einer zwischen Motorraum und Fahrgastraum vorgesehenen Stirnwand einer Fahrzeugkarosserie, wobei das Trägerelement versehen ist mit
- einer Kunststoff-Trägerschicht mit einer Außenseite und mit einer Innenseite, auf die in einem mindestens zwei Formwerkzeugteile aufweisenden Formwerkzeug Schalldämpfungsmaterial einer Schalldämpfungsschicht des Schallisolationsverbundbauteils aufbringbar oder angebracht ist,
- mindestens einem in der Kunststoff-Trägerschicht ausgebildeten ersten Trägerschichtloch mit einem Lochrand und
- mindestens einem an dem und/oder versetzt zu dem Lochrand angeordneten, von der Kunststoff-Trägerschicht aufragenden Niederhaltevorsprung, der von Innenseite der Kunststoff-Trägerschicht absteht,
- wobei die Kunststoff-Trägerschicht mit ihrer Außenseite an einem ersten Formwerkzeugteil anliegend in das Formwerkzeug einbringbar ist und das der Innenseite der Kunststoff-Trägerschicht abgewandte Ende des mindestens einen Niederhaltevorsprungs zur Kontaktierung eines zweiten Formwerkzeugteils zum Anliegendhalten der Kunststoff-Trägerschicht im Bereich des Lochrands des ersten Trägerschichtlochs an dem ersten Formwerkzeugteil vorgesehen ist.

Um bei einem derartigen Trägerelement einen mit Schallisolationsmaterial versehenen Lochrand der Kunststoff-Trägerschicht realisieren zu können, ist es beispielsweise möglich, dass das erste Loch der Kunststoff-Trägerschicht zum mit radialem Spiel zum Lochrand des ersten Trägerschichtlochs erfolgenden Durchdringen mittels eines Formwerkzeugkerns, insbesondere mittels eines Formwerkzeugkerns vorgesehen ist, der an dem ersten oder dem zweiten Formwerkzeugteil des zum Anformen des Schalldämpfungsmaterials an die Rückseite der Kunststoff-Trägerschicht vorgesehenen Formwerkzeugs angeordnet ist.

Das Trägerelement kann vorteilhafterweise mit Niederhaltevorsprungsstrukturen ausgebildet sein, wie sie zuvor im Zusammenhang mit dem Schallisolationselement beschrieben worden sind. Auch kann die Kunststoff-Trägerschicht des Trägerelements so, wie weiter oben im Zusammenhang mit der Erfindung beschrieben, ausgebildet sein. Vor allem kann die Kunststoff-Trägerschicht des Trägerelements mit Schallisolationsmaterial und der Schalldämpfungsschicht versehen sein, wie es weiter oben im Rahmen der Erfindung vorgesehen ist.

Die Erfindung wird nachfolgend anhand eines Ausführungsbeispiels und unter Bezugnahme auf die Zeichnung näher erläutert. Im Einzelnen zeigen dabei:
- Fig. 1: perspektivisch und in Explosionsdarstellung eine Fahrzeugkarosserie mit Stirnwand-Schallisolationselement,
- Fig. 2: eine perspektivische Darstellung der Ausgestaltung der Schwerschicht, d.h. der Kunststoff-Trägerschicht des Schallisolationselements gemäß Fig. 1,
- Fig. 3: einen Schnitt durch das Formwerkzeug zum Anformen von Schallisolationsmaterial an die Kunststoff-Trägerschicht gemäß Fig. 2, wobei diese in das Formwerkzeug eingelegt ist,
- Fig. 4: einen Schnitt durch das Formwerkzeug entsprechend Fig. 3 jedoch nach dem Einbringen des Schalldämpfungsmaterials,
- Fig. 5: eine Ansicht auf die im Einbauzustand des Schallisolationselements an der Stirnwand der Fahrzeugkarosserie anliegenden Rückseite des Schallisolationselements,
- Fig. 6: eine perspektivische Darstellung mit Ansicht von der Rückseite auf das Schallisolationselement,
- Fig. 7: einen Schnitt durch das Schallisolationselement gemäß der Linie VII-VII der Fig. 6 und
- Fig. 8: perspektivisch eine alternative Ausgestaltung eines Niederhaltevorsprungs.

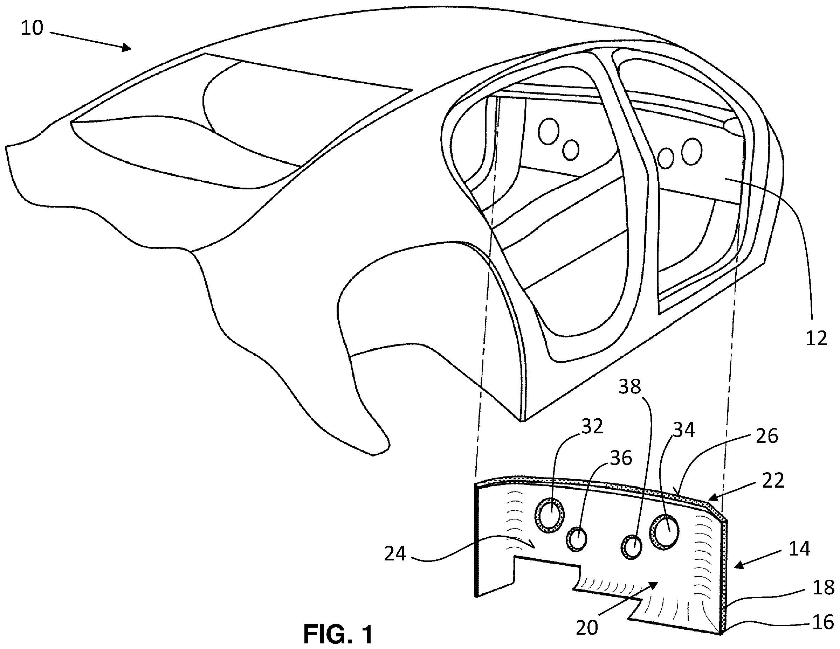

Fig. 1 zeigt schematisch eine Fahrzeugkarosserie 10 mit Stirnwand 12, an der ein als Verbundbauteil ausgeführtes Schallisolationselement 14 angeordnet ist. Die Fixierung des Schallisolationselements 14 an der Stirnwand 12 erfolgt zumindest teilweise durch z.B. integral mit dem Schallisolationselement 14 ausgebildete Fixiervorsprünge (nicht dargestellt), die im montierten Zustand des Schallisolationselements 14 mit jeweils einer Aufnahmeöffnung in der Fahrzeugkarosserie 10 bzw. in der Stirnwand 12 zusammenwirken, in denen die Fixiervorsprünge platziert sind. In diesem Zusammenhang sei beispielhaft auf WO-A-2018/192858 verwiesen, deren Inhalt hiermit durch Bezugnahme zum Gegenstand der vorliegenden Offenbarung gehört.

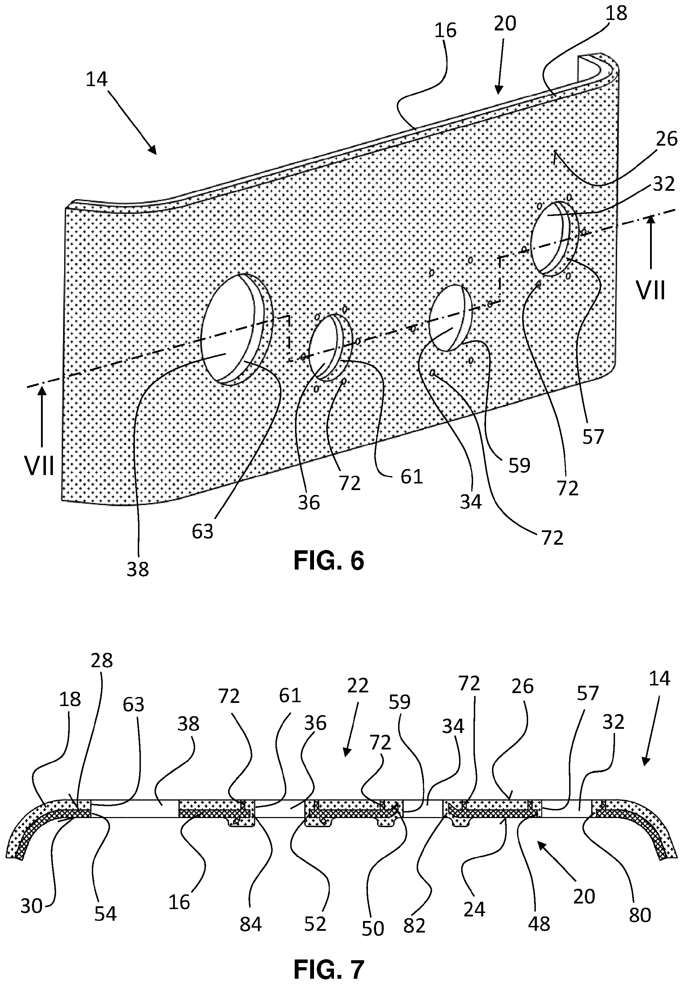

Wie an sich bekannt, weist das Schallisolationselement 14 ein sogenanntes Masse-Feder-System auf, das eine Kunststoff-Trägerschicht 16 als Schwer- bzw. Masseschicht aus beispielsweise EVA/PE, PE, PP, EPDM, TPE, TPO und/oder Polyurethan-Schaumstoff, die jeweils mit einem hohen Gewichtsanteil von bis zu 70 Gew.-% eines mineralischen Füllstoffs hoher Dichte, beispielsweise Feldspat, versehen sind, und eine Schalldämpfungsschicht 18 (siehe beispielsweise Fig. 6) aus einem Schalldämpfungsmaterial (beispielsweise Polyurethan-Schaum) aufweist.

Im eingebauten Zustand gemäß Fig. 1 weist das Schallisolationselement 14 eine dem Fahrgastraum zugewandte Vorderseite 20 und eine der Stirnwand zugewandte und an dieser anliegende Rückseite 22 auf. Die Vorderseite 20 wird von der Außenfläche 24 der Kunststoff-Trägerschicht 16 gebildet, während die Rückseite 22 durch die Außenseite 26 der Schalldämpfungsschicht 18 gebildet wird. An ihren einander zugewandten Innenseiten 28, 30 sind die Kunststoff-Trägerschicht 16 und die Schalldämpfungsschicht 18 miteinander verbunden (siehe auch Fig. 7).

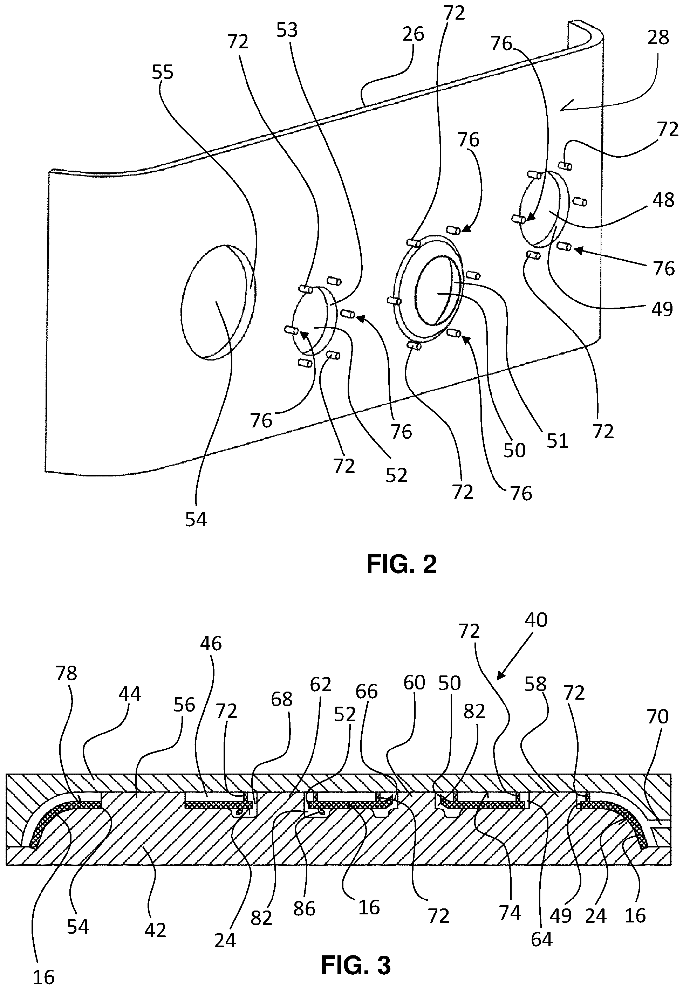

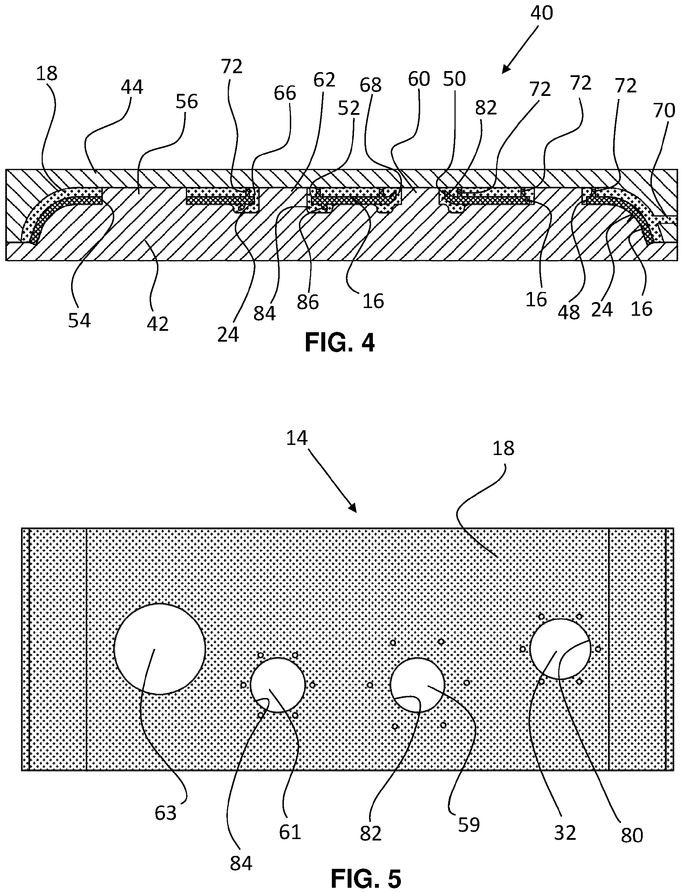

Das Schallisolationselement 14 weist mehrere Durchgangsöffnungen 32, 34, 36, 38 auf, die in diesem Ausführungsbeispiel unterschiedlich ausgebildet sind und unterschiedliche Typen von Durchführungen eines Schallisolationselements zeigen sollen. Mit Ausnahme der Durchgangsöffnung 34 sind die anderen in den Figuren gezeigten Durchgangsöffnungen 34 mit Schalldämpfungsmaterial längs der Lochränder von Löchern in der Kunststoff-Trägerschicht 16 versehen. Die Anformung des Schalldämpfungsmaterials längs dieser Lochränder erfordert einen gewissen Aufwand an Positionierhilfe innerhalb des für das Anformen des Schalldämpfungsmaterials vorgesehenen Formwerkzeugs, wie es in den Fign. 3 und 4 gezeigt ist.

In Fig. 3 ist ein Querschnitt durch ein in diesem Ausführungsbeispiel zweiteiliges Formwerkzeug 40 gezeigt, das ein erstes Formwerkzeugteil 42 und ein zweites Formwerkzeugteil 44 aufweist. In den Formraum 46 des Formwerkzeugs 40 wird zunächst die zuvor hergestellte Kunststoff-Trägerschicht 16 eingelegt, und zwar mit der Außenfläche 24 der Kunststoff-Trägerschicht auf der Innenseite des ersten Formwerkzeugteils 42 aufliegend. Anschließend wird das Formwerkzeug 40 zusammengefahren. In der Kunststoff-Trägerschicht 16 sind in diesem Ausführungsbeispiel vier Löcher 48, 50, 52, 54 mit Lochrändern 49, 51, 53, 55 ausgebildet. In das Loch 54 ragt ein Formwerkzeugkern 56 hinein, der das Loch 54 vollständig ausfüllt. In die Löcher 48, 50, 52 ragen jeweils Formwerkzeugkerne 58, 60, 62 hinein, die im Querschnitt kleiner sind als die besagten Löcher und damit Freiräume 64, 66, 68 im Formraum 46 zwischen sich und den Lochrändern 49, 51, 53 freihalten.

Die Freiräume werden also, wie anhand der Fign. 3 und 4 zu erkennen ist, mit Schalldämpfungsmaterial ausgefüllt, wenn dieses Material in das Formwerkzeug 40 über z.B. einen (von insbesondere mehreren) Einlässen 70 eingebracht wird. Die Formwerkzeugkerne 56, 58, 60, 62 sorgen für mit den Trägerschichtlöchern 48, 50, 52, 54 jeweils fluchtende Löcher 57, 59, 61, 63 in der Schalldämpfungsschicht 18 des Schallisolationselements 14.

Das Eindringen von Schalldämpfungsmaterial in die Löcher 48, 50, 52 (in das Loch 54 dringt wegen des dieses Loch vollständig ausfüllenden Formwerkzeugkerns 56 kein Material ein) birgt die Gefahr, dass die Kunststoff-Trägerschicht 16 "unterspült" wird und dann in dem Formraum 46 "aufschwimmt". Um dies zu verhindern, sind im Bereich jedes Lochs 48, 50, 52 von der Innenseite 28 der Kunststoff-Trägerschicht 16 aufragende Niederhaltevorsprünge 72 (in diesem Ausführungsbeispiel sämtlich in Stift- bzw. Domform ausgeführt) angeordnet, die an der den Formraum 46 begrenzenden Innenseite 74 des zweiten Formwerkzeugteils 44 anliegen bzw. deren freie Enden 76 in geringem Abstand zu dem Formwerkzeugteil 44 angeordnet sind. Diese Niederhaltevorsprünge 72 halten die Kunststoff-Trägerschicht 16 an der Innenseite 78 des ersten Formwerkzeugteils 42 positioniert. Damit wird ein "Aufschwimmen" der Kunststoff-Trägerschicht 16 beim Eindringen des Schalldämpfungsmaterials und beim Umfließen um die Ränder der Löcher 48, 50, 52 verhindert.

Je nach gewünschter Ausgestaltung des Umschließens bzw. Umgebens bzw. teilweise Umgebens der Ränder der Löcher 48, 50, 52 mit Schalldämpfungsmaterial weist die Kunststoff-Trägerschicht 16 unterschiedliche Strukturen im Bereich der besagten Löcher auf, wie es in den Fign. 3 und 4 bzw. 6 und 7 gezeigt ist. So fluchtet beispielsweise der Überstandsrand 80 im Loch 48 mit der Außenfläche 24 der Kunststoff-Trägerschicht 16, während der entsprechende Überstandsrand 82, 84 der Löcher 50, 52 die Lochränder 51, 53 beidseitig umschließt. Dabei ist hinsichtlich der Ausgestaltung des Lochs 52 noch zusätzlich vorgesehen, dass von der Vorderseite 20 der Kunststoff-Trägerschicht 16 zusätzliche Hakenstrukturen o.dgl. Vorsprünge 86 vorstehen, die in das Schalldämpfungsmaterial eingebettet sind und somit für einen zusätzlichen Halt der Schalldämpfungsschicht 18 an der Vorderseite 20 der Kunststoff-Trägerschicht 16 sorgen.

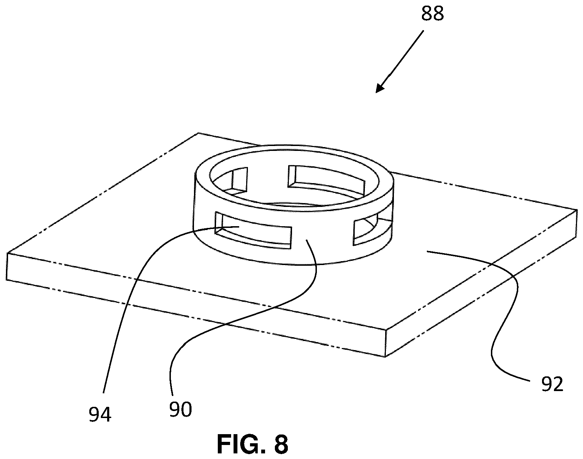

In Fig. 8 ist eine alternative Ausgestaltung eines Niederhaltevorsprungs 88 gezeigt. In diesem Ausführungsbeispiel ist der Niederhaltevorsprung 88 als umlaufender Kragen 90 ausgebildet, der um die Öffnung in der bei 92 angedeuteten Kunststoff-Trägerschicht verläuft. Der Kragen 90 weist Durchbrechungen 94 auf, durch die hindurch Schallisolationsmaterial bis nahe zum Rand des Lochs in der Kunststoff-Trägerschicht 92 bzw. um dessen Lochrand herum gelangen kann, wie es für die Lochgestaltungen gemäß Fig. 3 gezeigt ist. Im mit Schallisolationsmaterial versehenem Zustand ist der Niederhaltevorsprung 88 in diesem Material eingebettet.

### BEZUGSZEICHENLISTE

- 10: Fahrzeugkarosserie
- 12: Stirnwand
- 14: Schallisolationselement
- 16: Kunststoff-Trägerschicht
- 18: Schalldämpfungsschicht
- 20: Vorderseite
- 22: Rückseite
- 24: Außenfläche Vorderseite
- 26: Außenseite
- 28: Innenseite
- 30: Innenseite
- 32: Durchgangsöffnung
- 34: Durchgangsöffnung
- 36: Durchgangsöffnung
- 38: Durchgangsöffnung
- 40: zweiteiliges Formwerkzeug
- 42: erstes Formwerkzeugteil
- 44: zweites Formwerkzeugteil
- 46: Formraum
- 48: Trägerschichtloch
- 49: Lochrand
- 50: Trägerschichtloch
- 51: Lochrand
- 52: Trägerschichtloch
- 53: Lochrand
- 54: Trägerschichtloch
- 55: Lochrand
- 56: Formwerkzeugkern
- 57: Schalldämpfungsschichtloch
- 58: Formwerkzeugkern
- 59: Schalldämpfungsschichtloch
- 60: Formwerkzeugkern
- 61: Schalldämpfungsschichtloch
- 62: Formwerkzeugkern
- 63: Schalldämpfungsschichtloch
- 64: Freiraum
- 66: Freiraum
- 68: Freiraum
- 70: Einlass
- 72: Niederhaltevorsprung
- 74: Innenseite des Formraums
- 76: freies Ende des Niederhaltevorsprungs
- 78: Innenseite des Formraums
- 80: Überstandsrand
- 82: Überstandsrand
- 84: Überstandsrand
- 86: Vorsprung
- 88: Niederhaltevorsprung
- 90: Kragen
- 92: Kunststoff-Trägerschicht
- 94: Durchbrechung im Kragen

### LITERATURVERZEICHNIS

WO-A-2018/192858
US-A-2006/0091699
DE-A-37 33 284
DE-A-10 2013 006 300
DE-C-198 33 098
DE-A-41 32 571
EP-A-2 786 851
JP H07-285 138 A

## Patentansprüche

1. Schallisolationselement für die zwischen Fahrgastraum und Motorraum angeordnete Stirnwand einer Fahrzeugkarosserie, mit
- einem Verbundbauteil, das eine Kunststoff-Trägerschicht (16) und eine mit dieser verbundene Schalldämpfungsschicht (18) aufweist,
- wobei das Verbundbauteil eine in dessen Einbauzustand betrachtet dem Fahrgastraum zugewandte, von der Außenfläche (24) der Kunststoff-Trägerschicht (16) gebildete Vorderseite (20) und eine an der Stirnwand anliegende Rückseite (22) aufweist, die von der der Kunststoff-Trägerschicht (16) abgewandten Außenseite (26) der Schalldämpfungsschicht (18) gebildet ist, und
- mindestens einer ersten Durchgangsöffnung (32, 34, 36, 38) in dem Verbundbauteil,
- wobei die erste Durchgangsöffnung (32, 34, 36, 38) ein in der Kunststoff-Trägerschicht (16) ausgebildetes Trägerschichtloch (48, 50, 52, 54) mit einem Lochrand (49, 51, 53, 55) und ein in der Schalldämpfungsschicht (18) ausgebildetes Schalldämpfungsschichtloch (57, 59, 61, 63) mit einem Lochrand aufweist und
- wobei an dem und/oder versetzt zu dem Lochrand (49, 51, 53, 55) des Trägerschichtlochs (48, 50, 52, 54) auf der der Außenfläche (24) der Kunststoff-Trägerschicht (16) abgewandten und damit der Schalldämpfungsschicht (18) zugewandten Innenseite (28) der Kunststoff- Trägerschicht (16) von dieser mindestens ein Niederhaltevorsprung (72) aufragt, der in dem Schalldämpfungsmaterial der Schalldämpfungsschicht (18) eingebettet ist und dessen der Kunststoff-Trägerschicht (16) abgewandten freien Enden (76) mit der der Kunststoff-Trägerschicht (16) abgewandten Außenseite (26) der Schalldämpfungsschicht (18) im Wesentlichen fluchten.

2. Schallisolationselement nach Anspruch 1, **dadurch gekennzeichnet, dass** das der Innenseite (28) der Kunststoff-Trägerschicht (16) abgewandte freie Ende (76) des mindestens einen Niederhaltevorsprungs (72) von Schalldämpfungsmaterial überzogen ist.

3. Schallisolationselement nach Anspruch 1 oder 2, **dadurch gekennzeichnet, dass** umlaufend um das Trägerschichtloch (48, 50, 52, 54) mehrere Niederhaltevorsprünge (72) angeordnet sind.

4. Schallisolationselement nach einem der Ansprüche 1 bis 3, **dadurch gekennzeichnet, dass** der mindestens eine Niederhaltevorsprung (72) als stiftförmiger Vorsprung oder als Niederhaltedorn ausgebildet ist.

5. Schallisolationselement nach Anspruch 1 oder 2, **dadurch gekennzeichnet, dass** der mindestens eine Niederhaltevorsprung (72) als um das Trägerschichtloch (48, 50, 52, 54) umlaufender Kragen mit einer mit Durchbrechungen versehenen Umfangswand ausgebildet ist.

6. Schallisolationselement nach einem der Ansprüche 1 bis 5, **dadurch gekennzeichnet, dass** über den Lochrand (49, 51, 53, 55) des Trägerschichtlochs (48, 50, 52, 54) nach innen Schalldämpfungsmaterial der Schalldämpfungsschicht (18) übersteht und einen ringförmigen Überstandsrand (80, 82, 84) bildet.

7. Schallisolationselement nach Anspruch 6, **dadurch gekennzeichnet, dass** der Überstandsrand (80, 82, 84) mit der Außenseite (24) der Kunststoff-Trägerschicht (16) fluchtet oder sich entlang zumindest eines Teilbereichs des Lochrands (49, 51, 53, 55) des Trägerschichtlochs (48, 50, 52, 54) auf der Außenseite (24) der Kunststoff-Trägerschicht (16) erstreckt.

8. Schallisolationselement nach einem der Ansprüche 1 bis 7, **gekennzeichnet durch** mindestens eine zweite Durchgangsöffnung (32, 34, 36, 38) in dem Verbundbauteil, die ein in der Kunststoff-Trägerschicht (16) ausgebildetes Trägerschichtloch (48, 50, 52, 54) und ein in der Schalldämpfungsschicht (18) ausgebildetes Schalldämpfungsschichtloch (57, 59, 61, 63) umfasst, wobei beide Löcher miteinander fluchtende Lochränder aufweisen.

9. Trägerelement für ein Schallisolationselement nach Anspruch 1 zur Anordnung an einer zwischen Motorraum und Fahrgastraum vorgesehenen Stirnwand einer Fahrzeugkarosserie, mit
- einer Kunststoff-Trägerschicht (16) mit einer Außenseite und mit einer Innenseite, auf die in einem mindestens zwei Formwerkzeugteile aufweisenden Formwerkzeug Schalldämpfungsmaterial einer Schalldämpfungsschicht (18) des Schallisolationsverbundbauteils aufbringbar ist,
- mindestens einem in der Kunststoff-Trägerschicht (16) ausgebildeten ersten Trägerschichtloch mit einem Lochrand und
- mindestens einem an dem und/oder versetzt zu dem Lochrand angeordneten, von der Kunststoff-Trägerschicht (16) aufragenden Niederhaltevorsprung (72), der von der Innenseite der Kunststoff-Trägerschicht (16) absteht, wobei das der Innenseite der Kunststoff-Trägerschicht (16) abgewandte Ende des mindestens einen Niederhaltevorsprungs (72) zur Kontaktierung eines zweiten Formwerkzeugteils zum Anliegendhalten der Kunststoff-Trägerschicht (16) im Bereich des Lochrands des ersten Trägerschichtlochs an einem ersten Formwerkzeugteil geeignet und bestimmt ist.

10. Trägerelement nach Anspruch 9, **dadurch gekennzeichnet, dass** das erste Loch der Kunststoff-Trägerschicht (16) zum mit radialem Spiel zum Lochrand des ersten Trägerschichtlochs erfolgenden Durchdringen mittels eines Formwerkzeugkerns, insbesondere mittels eines Formwerkzeugkerns vorgesehen ist, der an dem ersten oder dem zweiten Formwerkzeugteil des zum Anformen des Schalldämpfungsmaterials an die Rückseite der Kunststoff-Trägerschicht (16) vorgesehenen Formwerkzeugs angeordnet ist.

11. Trägerelement nach Anspruch 9 oder 10, **dadurch gekennzeichnet, dass** der mindestens eine Niederhaltevorsprung (72) wie in einem der Ansprüche 1 bis 8 angegeben ausgebildet ist und/oder dass die Kunststoff-Trägerschicht (16) wie in einem der Ansprüche 1 bis 8 angegeben ausgebildet ist und/oder dass die Kunststoff-Trägerschicht (16) wie in einem der Ansprüche 1 bis 8 angegeben mit einer Schalldämpfungsschicht (18) oder mit Schalldämpfungsmaterial versehen ist.

## Claims

1. Sound insulation element for the end wall of a vehicle body arranged between the passenger compartment and the engine compartment, with
- a composite component comprising a plastic carrier layer (16) and a sound-absorbing layer (18) connected thereto,
- wherein the composite component has a front side (20) facing the passenger compartment when viewed in its installed state and formed by the outer surface (24) of the plastic carrier layer (16), and a rear side (22) which bears against the end wall and is formed by the outer side (26) of the sound-absorbing layer (18) facing away from the plastic carrier layer (16) and
- at least one first through opening (32, 34, 36, 38) in the composite component,
- wherein the first through hole (32, 34, 36, 38) comprises a carrier layer hole (48, 50, 52, 54) formed in the plastic carrier layer (16) with a hole edge (49, 51, 53, 55) and a sound-absorbing layer hole (57, 59, 61, 63) formed in the sound-absorbing layer (18) with a hole edge and
- wherein at least one hold-down projection (72) projects from the plastic carrier layer (16) on the inner side (28) of the plastic carrier layer (16) facing away from the outer surface (24) of the plastic carrier layer (16) and thus facing the sound-absorbing layer (18) at the and/or offset to the hole edge (49, 51, 53, 55) of the carrier layer hole (48, 50, 52, 54), which is embedded in the sound-absorbing material of the sound-absorbing layer (18) and whose free ends (76) facing away from the plastic carrier layer (16) are substantially aligned with the outer side (26) of the sound-absorbing layer (18) facing away from the plastic carrier layer (16).

2. Sound-insulating element according to claim 1, **characterized in that** the free end (76) of the at least one hold-down projection (72) facing away from the inner side (28) of the plastic carrier layer (16) is covered with sound-absorbing material.

3. Sound insulation element according to claim 1 or 2, **characterized in that** several hold-down projections (72) are arranged circumferentially around the carrier layer hole (48, 50, 52, 54).

4. Sound-insulating element according to one of claims 1 to 3, **characterized in that** the at least one hold-down projection (72) is designed as a pin-shaped projection or as a hold-down dome.

5. Sound insulation element according to claim 1 or 2, **characterized in that** the at least one hold-down projection (72) is designed as a collar running around the carrier layer hole (48, 50, 52, 54) and having a circumferential wall provided with perforations.

6. Sound-insulating element according to one of claims 1 to 5, **characterized in that** sound-absorbing material of the sound-absorbing layer (18) projects inwards beyond the edge (49, 51, 53, 55) of the hole in the carrier layer hole (48, 50, 52, 54) and forms an annular projection edge (80, 82, 84).

7. Sound insulation element according to claim 6, **characterized in that** the projection edge (80, 82, 84) is aligned with the outer side (24) of the plastic carrier layer (16) or extends along at least a partial region of the perforated edge (49, 51, 53, 55) of the carrier layer hole (48, 50, 52, 54) on the outer side (24) of the plastic carrier layer (16).

8. A sound insulation element according to any one of claims 1 to 7, **characterized by** at least one second through hole (32, 34, 36, 38) in the composite component, comprising a support layer hole (48, 50, 52, 54) formed in the plastic carrier layer (16) and a sound-absorbing layer hole (57, 59, 61, 63) formed in the sound-absorbing layer (18), both holes having aligned hole edges.

9. Carrier element for a sound insulation element according to claim 1 for arrangement on an end wall of a vehicle body provided between the engine compartment and the passenger compartment, with
- a plastic carrier layer (16) with an outer side and with an inner side, to which sound-absorbing material of a sound-absorbing layer (18) of the sound-insulating composite component can be applied in a molding tool having at least two molding tool parts,
- at least one first carrier layer hole formed in the plastic carrier layer (16) with a hole edge and
- at least one hold-down projection (72) which is arranged on and/or offset relative to the edge of the hole, projects from the plastic carrier layer (16) and protrudes from the inside of the plastic carrier layer (16), the end of the at least one hold-down projection (72) facing away from the inside of the plastic carrier layer (16) being suitable and intended for contacting a second mold part for holding the plastic carrier layer (16) against a first mold part in the region of the edge of the hole of the first carrier layer hole.

10. Carrier element according to claim 9, **characterized in that** the first hole of the plastic carrier layer (16) is provided for penetration with radial clearance to the hole edge of the first carrier layer hole by a moulding tool core, in particular by a moulding tool core, which is arranged on the first or the second moulding tool part of the moulding tool provided for moulding the sound-absorbing material to the rear side of the plastic support layer (16).

11. Carrier element according to claim 9 or 10, **characterized in that** the at least one hold-down projection (72) is designed as specified in one of claims 1 to 8 and/or **in that** the plastic carrier layer (16) is designed as specified in one of claims 1 to 8 and/or **in that** the plastic carrier layer (16) is provided with a sound-absorbing layer (18) or with sound-absorbing material as specified in one of claims 1 to 8.

## Revendications

1. Elément d'isolation acoustique pour la paroi frontale d'une carrosserie de véhicule, disposée entre l'habitacle et le compartiment moteur, avec
- un élément composite qui présente une couche de support en matière plastique (16) et une couche d'insonorisation (18) reliée à celle-ci,
- dans lequel l'élément composite présentant un côté avant (20) tourné vers l'habitacle, vu dans son état de montage, formé par la surface extérieure (24) de la couche de support en matière plastique (16), et un côté arrière (22) s'appliquant contre la paroi frontale, qui est formé par le côté extérieur (26) de la couche d'insonorisation (18), opposé à la couche de support en matière plastique (16), et
- au moins une première ouverture de passage (32, 34, 36, 38) dans l'élément composite,
- dans lequel la première ouverture de passage (32, 34, 36, 38) présente un trou de couche de support (48, 50, 52, 54) realisé dans la couche de support en matière plastique (16) et ayant un bord de trou (49, 51, 53, 55), et un trou de couche d'insonorisation (57, 59, 61, 63) realisé dans la couche d'insonorisation (18) et ayant un bord de trou, et
- dans lequel, sur le bord de trou (49, 51, 53, 55) du trou de la couche de support (48, 50, 52, 54) et/ou de manière décalée par rapport à celui-ci, sur la face intérieure (28) de la couche de support en matière plastique (16) opposée à la surface extérieure (24) de la couche de support en matière plastique (16) et donc tournée vers la couche d'insonorisation (18), fait saillie de celle-ci au moins une saillie de maintien vers le bas (72), qui est noyée dans le matériau d'insonorisation de la couche d'insonorisation (18) et dont les extrémités libres (76) opposées à la couche de support en matière plastique (16) sont sensiblement alignées avec la face extérieure (26) de la couche d'insonorisation (18) opposée à la couche de support en matière plastique (16).

2. Elément d'isolation acoustique selon la revendication 1, **caractérisé en ce que** l'extrémité libre (76), opposée à la face intérieure (28) de la couche de support en matière plastique (16), de la au moins une saillie de maintien vers le bas (72) est recouverte d'un matériau d'insonorisation.

3. Elément d'isolation acoustique selon la revendication 1 ou 2, **caractérisé en ce que** plusieurs saillies de-maintien vers le bas (72) sont disposées sur le pourtour du trou de la couche de support (48, 50, 52, 54).

4. Elément d'isolation acoustique selon l'une des revendications 1 à 3, **caractérisé en ce que** la au moins une saillie de maintien vers le bas (72) est réalisée comme une saillie en forme de broche ou comme un dôme de maintien vers le bas

5. Elément d'isolation acoustique selon la revendication 1 ou 2, **caractérisé en ce que** l'au moins une saillie de maintien vers le bas (72) est réalisée comme une collerette sur le pourtour du trou de la couche de support (48, 50, 52, 54) avec une paroi périphérique pourvue d'ajours.

6. Elément d'isolation acoustique selon l'une des revendications 1 à 5, **caractérisé en ce que** du matériau d'insonorisation de la couche d'insonorisation (18) dépasse vers l'intérieur du bord de trou (49, 51, 53, 55) du trou de la couche de support (48, 50, 52, 54) et forme un bord de dépassement annulaire (80, 82, 84).

7. Elément d'isolation acoustique selon la revendication 6, **caractérisé en ce que** le bord de dépassement (80, 82, 84) est aligné avec le côté extérieur (24) de la couche de support en matière plastique (16) ou s'étend le long d'au moins une partie du bord du trou (49, 51, 53, 55) du trou de la couche de support (48, 50, 52, 54) sur le côté extérieur (24) de la couche de support en matière plastique (16).

8. Elément d'isolation acoustique selon l'une des revendications 1 à 7, **caractérisé par** au moins une deuxième ouverture de passage (32, 34, 36, 38) dans l'élément composite, qui comprend un trou de couche de support (48, 50, 52, 54) realisé dans la couche de support en matière plastique (16) et un trou de couche d'isolation acoustique (57, 59, 61, 63) realisé dans la couche d'insonorisation (18), les deux trous ayant des bords de trou alignés l'un avec l'autre.

9. Elément de support pour un élément d'isolation acoustique selon la revendication 1, destiné à être disposé sur une paroi frontale d'une carrosserie de véhicule prévue entre le compartiment moteur et l'habitacle, avec
- une couche de support en matière plastique (16) avec une face extérieure et avec une face intérieure, sur laquelle peut être appliqué, dans un outil de moulage présentant au moins deux parties d'outil de moulage, un matériau d'insonorisation d'une couche d'insonorisation (18) de l'élément composite d'isolation acoustique,
- au moins un premier trou de couche de support avec un bord de trou realisé dans la couche de support en matière plastique (16), et
- au moins une saillie de maintien vers le bas (72) disposée sur le bord du trou et/ou décalée par rapport à celui-ci, qui fait saillie de la couche de support en matière plastique (16) et dépassant de la face intérieure de la couche de support en matière plastique (16), l'extrémité de la au moins une saillie de maintien vers le bas (72) opposée à la face intérieure de la couche de support en matière plastique (16) étant appropriée et destinée à la mise en contact d'une deuxième partie d'outil de moulage pour maintenir la couche de support en matière plastique (16) en appui sur une première partie d'outil de moulage dans la zone du bord de trou du trou de la première couche de support.

10. Elément de support selon la revendication 9, **caractérisé en ce que** le premier trou de la couche de support en matière plastique (16) est prévu pour la pénétration qui s'effectue avec un jeu radial par rapport au bord du trou du premier trou de la couche de support au moyen d'un noyau d'outil de moulage, en particulier au moyen d'un noyau d'outil de moulage qui est disposé sur la première ou la deuxième partie d'outil de moulage pour mouler le matériau d'insonorisation à la face arrière de la couche de support en matière plastique (16).

11. Elément de support selon la revendication 9 ou 10, **caractérisé en ce que** la au moins une saillie de maintien vers le bas (72) est réalisée comme indiqué dans l'une des revendications 1 à 8 et/ou **en ce que** la couche de support en matière plastique (16) est réalisée comme indiqué dans l'une des revendications 1 à 8 et/ou **en ce que** la couche de support en matière plastique (16) est pourvue d'une couche d'insonorisation (18) ou de matériau d'insonorisation comme indiqué dans l'une des revendications 1 à 8.
